# EUROPÄISCHE PATENTSCHRIFT

(11) **EP 3 866 588 B1**
(45) Veröffentlichungstag und Bekanntmachung des Hinweises auf die Patenterteilung: **12.06.2024**
(21) Anmeldenummer: 19790496.4
(22) Anmeldetag: 17.10.2019
(51) Int. Cl.: A01K 45/00, B65G 1/02

(54) **LADUNGSHILFE FÜR GESTAPELTE UND MIT LEBENDEN GEFLÜGELTIEREN ZU BEFÜLLENDE TRANSPORTBEHÄLTER**
LOADING AID FOR STACKED TRANSPORT CONTAINERS TO BE FILLED WITH LIVING POULTRY ANIMALS
AIDE AU CHARGEMENT POUR DES CONTENANTS DE TRANSPORT EMPILÉS ET À REMPLIR DE VOLAILLES VIVANTES

(30) Priorität: 19.10.2018 DE 102018126024
(43) Veröffentlichungstag der Anmeldung: 25.08.2021
(73) Patentinhaber: Nordischer Maschinenbau Rud. Baader GmbH + Co. KG, 23560 Lübeck (DE)
(72) Erfinder: KJELDSEN, Poul, 8400 Ebeltoft (DK); JENSEN, Jonas, 9500 Hobro (DK)
(74) Vertreter: Stork Bamberger Patentanwälte PartmbB
(86) Internationale Anmeldenummer: PCT/EP2019/078268
(87) Internationale Veröffentlichungsnummer: WO 2020/079181

(56) Entgegenhaltungen:
- FR-A1- 2 989 863
- JP-A- H03 195 613
- US-A- 3 244 359
- US-A1- 2014 283 755

## Beschreibung

Die Erfindung betrifft eine Ladungshilfe, ausgebildet und eingerichtet zum temporären Zwischenlagern von nach oben mindestens teilweise geöffneten, ausschließlich leeren und in einem aus mindestens drei Transportbehältern gebildeten Stapel bereitstehenden Transportbehältern während der Befüllung der Transportbehälter mit lebenden Geflügeltieren, umfassend ein auf einem festen und ebenen Untergrund aufstellbares Rahmengestell, wobei das Rahmengestell auf einer dem zu befüllenden Stapel zugewandten Vorderseite mindestens zwei beabstandet zueinander angeordnete, vertikale Stützstreben und mindestens zwei übereinander angeordnete und zwischen den vertikalen Stützstreben ausgebildete Einführöffnungen für Transportbehälter aufweist, und wobei das Rahmengestell auf einer dem zu befüllenden Stapel abgewandten Rückseite mindestens zwei beabstandet zueinander angeordnete, vertikale Stützstreben aufweist, und wobei sich von den vertikalen Stützstreben auf der Vorderseite zu den vertikalen Stützstreben auf der Rückseite zu beiden Seiten des Rahmengestells Gleitschienen zur Bildung einer Aufnahme für einen Transportbehälter erstrecken, wobei das Rahmengestell mindestens zwei übereinander angeordnete Aufnahmen für jeweils einen Transportbehälter aufweist, wobei die Gleitschienen (17) auf der dem zu befüllenden Stapel (12) aus Transportbehältern (11) zugewandten Vorderseite (V) des Rahmengestells 25 (13) über die vertikalen Stützstreben (14) hinausragen.

Die Erfindung umfasst des Weiteren ein Verfahren zum sequentiellen Befüllen gestapelter und nach oben mindestens teilweise geöffneter Transportbehälter mit lebenden Geflügeltieren, umfassend die Schritte: a) Entfernen sämtlicher Transportbehälter eines aus mindestens drei leeren Transportbehältern gebildeten Stapels vom untersten Transportbehälter des Stapels, b) Befüllen des untersten, leeren Transportbehälters mit lebenden Geflügeltieren, c) Stapeln eines weiteren, leeren Transportbehälters auf den befüllten Transportbehälter, wobei der leere Transportbehälter den befüllten Transportbehälter abdeckt, d) Befüllen des weiteren, leeren Transportbehälters mit lebenden Geflügeltieren, e) Wiederholen der Schritte c) und d), bis sämtliche Transportbehälter des Stapels befüllt sind, und f) Abdecken des obersten, befüllten Transportbehälters des Stapels mit einem Deckel.

In der Massentierhaltung und -verarbeitung werden die Geflügeltiere bis zur Schlachtreife in Zuchtbetrieben gehalten. Sobald die Geflügeltiere die Schlachtreife erreicht haben, werden sie zu einer Verarbeitungsfabrik transportiert. Dazu müssen die Geflügeltiere eingesammelt bzw. eingefangen und in Transportbehälter verbracht werden. Dabei dienen die Transportbehälter zum internen Transport der lebenden Geflügeltiere innerhalb eines Zuchtbetriebes und zum externen Transport zwischen dem Zuchtbetrieb und der Verarbeitungsfabrik. Die Transportbehälter, so genannte Crates, Boxen, Schübe oder dergleichen, weisen eine Bodenwand und umlaufende Seitenwände auf. Bodenwand und Seitenwände können vollständig geschlossen sein. Bevorzugt sind die Bodenwand und die Seitenwände mit (Belüftungs-)Öffnungen versehen. Nach oben hin sind die Transportbehälter mindestens teilweise offen ausgebildet, um die Transportbehälter befüllen zu können. Die Transportbehälter sind stapelbar, um Stapel aus z.B. drei bis zehn Transportbehältern bilden zu können.

Unterschiedliche Ladungshilfen für solche Transportbehälter bzw. solche aus Transportbehältern gebildeten Stapel sind der US 3 244 359 A, der FR 2 989 863 A1 sowie der US 2014/283755 A1 zu entnehmen. Eine Ladungshilfe mit den Merkmalen des Oberbegriffes des Anspruches 1 ist der JP H03 195613 A zu entnehmen.

Um den Transport bei der Massentierhaltung und -verarbeitung sowohl intern als auch extern möglichst effizient und vor allem platzsparend zu gewährleisten, werden die leeren und befüllten Transportbehälter, in denen jeweils mehrere Geflügeltiere insbesondere zu Transportzwecken gehalten werden können, entsprechend gestapelt. Dieses Stapeln erfolgt wahlweise in einem stabilen und üblicherweise aus Stahl bestehenden Rahmengestell, oder direkt aufeinander. Für den Fall, dass die leeren Transportbehälter in einem Rahmengestell gestapelt sind, werden einzelne Transportbehälter nacheinander aus dem Rahmengestell entnommen, mit den lebenden Geflügeltieren befüllt und wieder in das Rahmengestell geschoben. Dabei ist insbesondere die Handhabung der befüllten Transportbehälter mühsam und aufwändig. Die befüllten Transportbehälter sind sehr schwer und entsprechend nicht ohne Hilfsmittel zu tragen. Des Weiteren besteht beim Einführen der befüllten Transportbehälter in das Rahmengestell die Gefahr von Verletzungen der Geflügeltiere durch Scherwirkung zwischen den Transportbehältern und dem Rahmengestell.

Zusammen mit diesem Rahmengestell werden die befüllten Transportbehälter dann für den Transport zu der Verarbeitungsfabrik auf die Transportfahrzeuge (im Folgenden als LKW bezeichnet) geladen. Neben dem zusätzlichen Platzbedarf für die Rahmengestelle wir durch die Rahmengestelle so genanntes Totgewicht transportiert, was zu einem ineffizienten Transport führt, da die maximale Transportlast der LKW durch die Rahmengestelle für die Geflügeltiere reduziert wird.

Es wird daher zunehmend dazu übergegangen, beim Befüllen der Transportbehälter aus diesen direkt einen Stapel zu bilden und diesen ohne ein Rahmengestell oder dergleichen auf die LKWs zu laden. Entsprechend kommen die leeren Transportbehälter aus der Verarbeitungsfabrik gestapelt zurück. Das bedeutet, dass in den Zuchtbetrieben Stapel aus leeren Transportbehältern bereitstehen, die wieder befüllt werden müssen. Die obersten (leeren) Transportbehälter müssen zunächst vom untersten Transportbehälter des aus leeren Transportbehältern gebildeten Stapels abgenommen und irgendwo zwischengelagert werden. Zum Befüllen der Transportbehälter wird dann zunächst ein erster Transportbehälter (der unterste des zu bildenden Stapels) befüllt. Daraufhin wird ein weiterer (noch leerer) Transportbehälter auf den befüllten Transportbehälter gesetzt, so dass der befüllte Transportbehälter durch den leeren Transportbehälter abgedeckt ist. Dieses Prozedere wird solange fortgesetzt, bis der Stapel vollständig ist. Die nach und nach zu befüllenden Transportbehälter müssen entsprechend zur Bildung eines aus befüllten Transportbehältern gebildeten Stapels wieder von irgendwo hergeholt werden. Abschließend wird der oberste Transportbehälter mit einem Deckel abgedeckt. Die Handhabung der leeren Transportbehälter ist dabei schwer und zeitintensiv. Dabei ist zu berücksichtigen, dass in einem Zuchtbetrieb viele hundert leere Transportbehälter pro Tag manuell gehandhabt werden müssen. Das führt zu einer hohen körperlichen Belastung des Personals.

Der Erfindung liegt somit die Aufgabe zugrunde, die Handhabung der Transportbehälter bei der Befüllung derselben mit lebenden Geflügeltieren zu vereinfachen und einen effizienten Transport zu gewährleisten. Der Erfindung liegt weiterhin die Aufgabe zugrunde, ein entsprechendes Verfahren vorzuschlagen.

Diese Aufgabe wird durch eine Ladungshilfe der eingangs genannten Art dadurch gelöst, dass dem Rahmengestell eine Handhabungseinrichtung zugeordnet ist, die zum Anheben der Transportbehälter vom Stapel ausgebildet und eingerichtet ist, derart, dass die gestapelten Transportbehälter mindestens auf der dem Rahmengestell zugewandten Seite außer Eingriff miteinander bringbar sind. Durch die erfindungsgemäß Ladungshilfe wird zum einen die Handhabung der Transportbehälter beim Befüllen derselben wesentlich vereinfacht, da die leeren Transportbehälter in ihrer gestapelten Form in kurzer Distanz zu den zu fangenden Geflügeltieren platziert werden können, ohne diese tragen zu müssen. Die leeren Transportbehälter eines Stapels können einfach nach hinten in die Aufnahmen der Ladungshilfe geschoben und wieder aus diesen herausgezogen werden. Das spart Zeit und entlastet die Bedienperson. Durch die Ladungshilfe, die in unmittelbarer Nähe zu den Stapeln platzierbar ist, können die leeren Transportbehälter temporär aufgenommen werden. Die über die Stützstreben hinausragenden Gleitschienen gewährleisten, dass eine Positionierung der Ladungshilfe zum Stapel aus leeren Transportbehältern einerseits und eine Wirkverbindung zwischen der Ladungshilfe und den einzelnen leeren Transportbehältern andererseits herstellbar ist, die das einfache und temporäre Zwischenlagern der leeren Transportbehälter ermöglichen. Zum anderen gewährleistet die erfindungsgemäße Ladungshilfe einen effizienten Transport, da die mit Geflügeltieren befüllten Transportbehälter ohne Rahmengestell zu den Verarbeitungsfabriken transportiert werden können. Die Ladungshilfen sind ausschließlich zum internen Gebrauch insbesondere in den Zuchtbetrieben vorgesehen und als flexibles Modul an beliebiger Stelle im Zuchtbetrieb platzierbar. Durch die Handhabungseinrichtung können die Behälter einzeln und nacheinander oder gemeinsam auf der dem Rahmengestell zugewandten Seite angehoben werden, so dass die Transportbehälter leicht in die Aufnahmen des Rahmengestells geschoben werden können.

Vorzugsweise ist auf der Vorderseite des Rahmengestells ein zusätzliches Positionierelement zum Positionieren des Rahmengestells relativ zum Stapel ausgebildet, das mit dem untersten Transportbehälter des zu befüllenden Stapels in Wirkverbindung bringbar ist. Durch das Positionierelement ist die Möglichkeit geschaffen, unmittelbar mit dem untersten Transportbehälter oder über eine Palette mit diesem in Wirkverbindung zu treten, um die temporär - nur für die Zwecke der Befüllung der Transportbehälter - aus Ladungshilfe und Stapel gebildete Einheit zu stabilisieren und für ein einfaches Schieben der Transportbehälter in die Aufnahmen des Rahmengestells und das Ziehen der Transportbehälter aus den Aufnahmen des Rahmengestells auszurichten. Damit wird die Handhabung der Transportbehälter wesentlich vereinfacht.

In einer bevorzugten Weiterbildung ist die unterste der Aufnahmen des Rahmengestells beabstandet zum Untergrund in einer Höhe ausgebildet, die der Höhe des zweiten Transportbehälters von unten des zu befüllenden Stapels entspricht. Dadurch ist eine besonders nahe/enge Platzierung der Ladungshilfe vor dem bzw.an dem Stapel gewährleistet. Im Übrigen führt diese Ausbildung dazu, dass die Ladungshilfe gewichtsreduziert ist, so dass die Handhabung der Ladungshilfe selbst, die ja an unterschiedlichen Plätzen innerhalb z.B. des Zuchtbetriebs zum Einsatz kommt, verbessert ist.

Vorteilhafterweise ist das Rahmengestell aus einem Leichtmetall, einem Kunststoff oder einem hinsichtlich des Gewichts vergleichbaren Material hergestellt. Damit ist eine einfache und leichte Handhabung der Ladungshilfe zwischen den Einsatzorten innerhalb z.B. des Zuchtbetriebs gewährleistet.

Eine zweckmäßige Ausführungsform ist dadurch gekennzeichnet, dass das Rahmengestell als Einheit faltbar und/oder zusammenlegbar ausgebildet ist. Neben der vereinfachten Handhabung ermöglicht diese Ausbildung das platzsparende Lagern der Ladungshilfe innerhalb z.B. des Zuchtbetriebs.

Bevorzugt weisen die Aufnahmen auf der dem Stapel zugewandten Vorderseite des Rahmengestells im Bereich der Einführöffnungen zwischen den beiden Stützstreben jeweils eine Einführhilfe auf, die sich mindestens über einen Teil der gesamten Breite erstreckt. Damit werden das Anheben bzw. Anlupfen der leeren Transportbehälter des zu befüllenden Stapels einerseits und das Schieben der Transportbehälter in die Aufnahmen und das Ziehen der Transportbehälter aus den Aufnahmen andererseits unterstützt.

Vorteilhafterweise sind dem Rahmengestell Transportrollen zugeordnet. Mit den Transportrollen ist das Handhaben der Ladungshilfe zwischen unterschiedlichen Einsatzorten vereinfacht.

Vorzugsweise umfasst die Handhabungseinrichtung eine manuell bedienbare Hebelarmkonstruktion, mittels der sämtliche Transportbehälter eines Stapels mit Ausnahme des untersten Transportbehälters anhebbar und wieder absenkbar sind. Dadurch wird die Handhabung der leeren Transportbehälter vereinfacht und verkürzt den gesamten Befüllvorgang.

Eine besonders bevorzugte Ausführungsform ist dadurch gekennzeichnet, dass den vertikalen Stützstreben an der dem Stapel zugewandten Vorderseite relativ zu den Stützstreben auf und ab bewegbare Stellelemente zugeordnet sind, die mit der Hebelarmkonstruktion gelenkig verbunden sind, und das die Gleitschienen an der Rückseite des Rahmengestells ortsfest und gelenkig an den Stützstreben der Rückseite gelagert sind, während die Gleitschienen an der Vorderseite des Rahmengestells in einem Langloch der Stellelemente ortsveränderlich und gelenkig gelagert sind. Damit ist eine konstruktiv einfache Lösung geschaffen, die die Handhabung noch weiter vereinfacht.

Bevorzugt ist die Handhabungseinrichtung zum automatischen Anheben sämtlicher Transportbehälter eines Stapels mit Ausnahme des untersten Transportbehälters und zum automatischen Ziehen der Transportbehälter vom Stapel in die Aufnahmen sowie zum automatischen Schieben der Transportbehälter aus den Aufnahmen zur Bildung des Stapels ausgebildet und eingerichtet. Durch diese Weiterbildung wird die Handhabung weiter vereinfacht, wodurch die Bedienperson maximal entlastet wird.

Die Aufgabe wird auch durch ein Verfahren mit den eingangs genannten Schritten dadurch gelöst, dass zum Entfernen der Transportbehälter gemäß Schritt a) eine Ladungshilfe vor dem zu befüllenden Stapel aus leeren Transportbehältern platziert wird und sämtliche Transportbehälter des Stapels mit Ausnahme des untersten Transportbehälters zum temporären Zwischenlagern in die Ladungshilfe geschoben werden, wobei die leeren Transportbehälter für die Schritte c) bis e) nach und nach von unten nach oben aus der Ladungshilfe auf den bereits gebildeten Stapel gefüllter Transportbehälter gezogen werden, sobald der oberste Transportbehälter des bereits gebildeten Stapels gefüllter Transportbehälter befüllt ist.

Vorzugsweise werden die leeren Transportbehälter des Stapels mit Ausnahme des untersten Transportbehälters mittels einer Handhabungseinrichtung mindestens auf der der Ladungshilfe zugewandten Seite derart angehoben, dass sie außer Eingriff miteinander sind, um sie barrierefrei in die Ladungshilfe schieben zu können. Mit anderen Worten werden die leeren und gestapelten Transportbehälter auf ihrer der Ladungshilfe zugewandten Vorderseite aus ihrer Wirkverbindung gelöst, so dass sie von der Rückseite her einfach in die Aufnahmen der Ladungshilfe geschoben werden können.

Eine vorteilhafte Weiterbildung ist dadurch gekennzeichnet, dass das Anheben der leeren Transportbehälter vor dem Einschieben derselben in die Ladungshilfe sowie das Schieben der Transportbehälter in die Ladungshilfe und das Ziehen der Transportbehälter aus der Ladungshilfe auf den Stapel aus bereits befüllten Transportbehältern mittels Antriebselementen automatisiert erfolgt.

Die sich daraus ergebende Vorteile wurden bereits im Zusammenhang mit der Ladungshilfe beschrieben, weshalb zur Vermeidung von Wiederholungen auf die entsprechenden Passagen verwiesen wird.

Weitere zweckmäßige und/oder vorteilhafte Merkmale und Weiterbildungen zur Ladungshilfe sowie zum Verfahren ergeben sich aus den Unteransprüchen und der Beschreibung. Besonders bevorzugte Ausführungsformen der Ladungshilfe sowie das Verfahren werden anhand der beigefügten Zeichnung näher erläutert. In der Zeichnung zeigt:

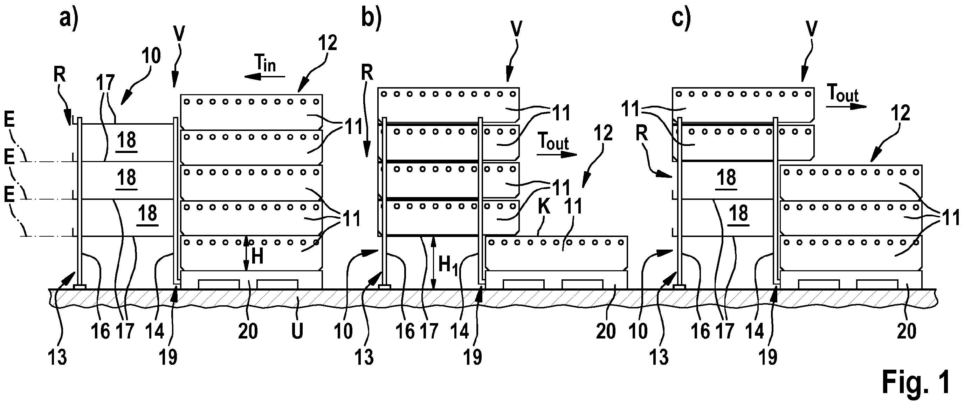

- Fig. 1a bis c: schematische Darstellungen einer ersten Ausführungsform der Ladungshilfe, wobei die Ladungshilfe in der Figur 1a vor einem zu befüllenden Stapel aus leeren Transportbehältern positioniert ist, während in der Figur 1b die vier oberen, leeren Transportbehälter des Stapels in der Ladungshilfe zwischengespeichert sind, um den untersten Transportbehälter des Stapels befüllen zu können, während in der Figur 1c drei der Transportbehälter bereits befüllt bzw. zur Befüllung wieder zu einem Stapel zusammengestellt sind, und zwei leere Transportbehälter noch in der Ladungshilfe zwischengespeichert sind,

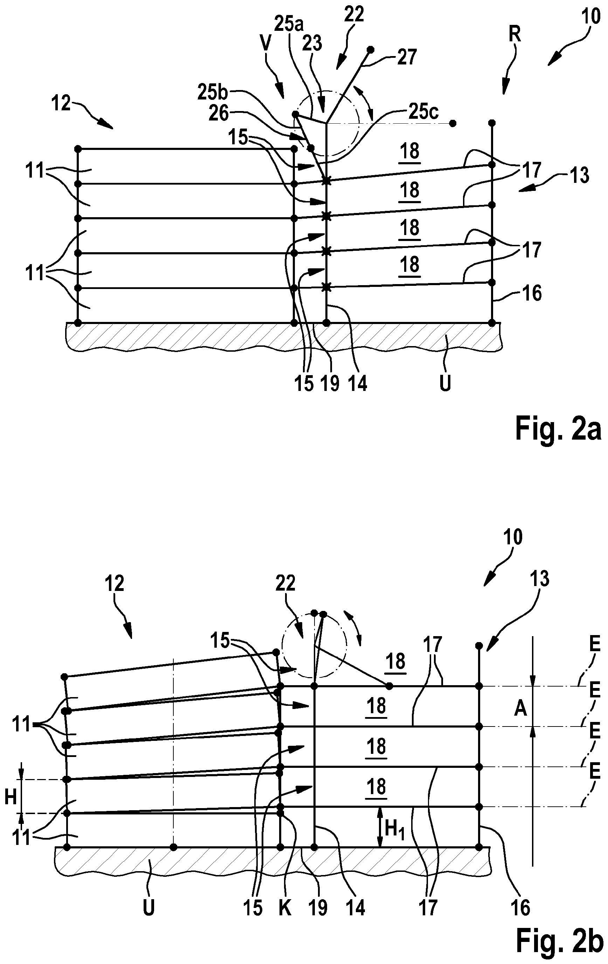

- Fig. 2 a und b: schematische Darstellungen einer weiteren Ausführungsform einer erfindungsgemäßen Ladungshilfe mit einer Handhabungseinrichtung, wobei die Handhabungseinrichtung in der Figur 2a in einer Ausgangsstellung ist, in der die Transportbehälter des Stapels noch in Eingriff zu einander stehen, während die Handhabungseinrichtung in der Figur 2b in einer Hebeposition ist, in der die Transportbehälter auf der dem Rahmengestell zugewandten Vorderseite angehoben sind, so dass die Transportbehälter außer Eingriff zueinander stehen,

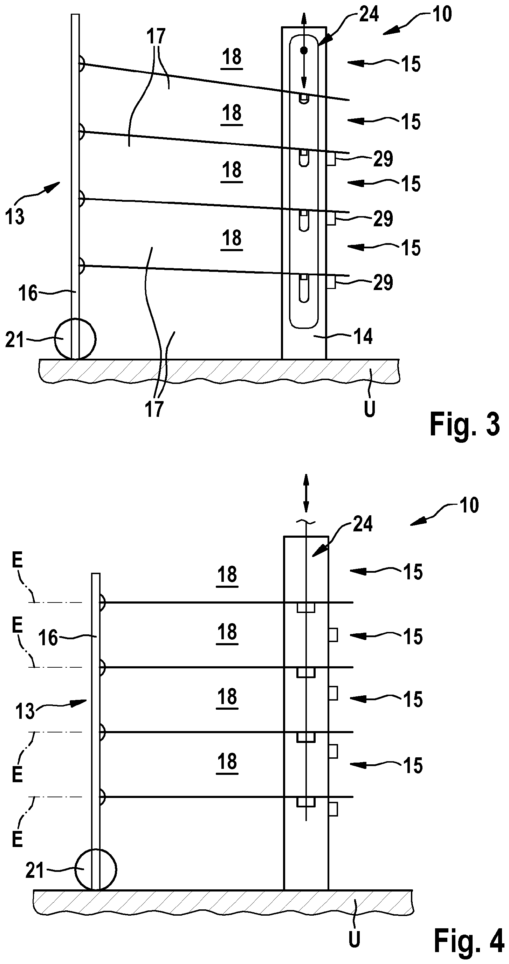

- Fig. 3: eine schematische Schnittdarstellung der Ladungshilfe mit einer ersten Ausführungsform einer Handhabungseinrichtung in Seitenansicht, wobei sich die Handhabungseinrichtung in einer Aufnahmeposition befindet, in der die Gleitschienen mit ihren freien Enden abgesenkt sind,
- Fig. 4: eine schematische Schnittdarstellung der Ladungshilfe mit einer weiteren Ausführungsform einer Handhabungseinrichtung in Seitenansicht, wobei sich die Handhabungseinrichtung in einer Liftposition befindet, in der die Gleitschienen mit ihren freien Enden in einer im Wesentlichen horizontalen Ausrichtung stehen, und

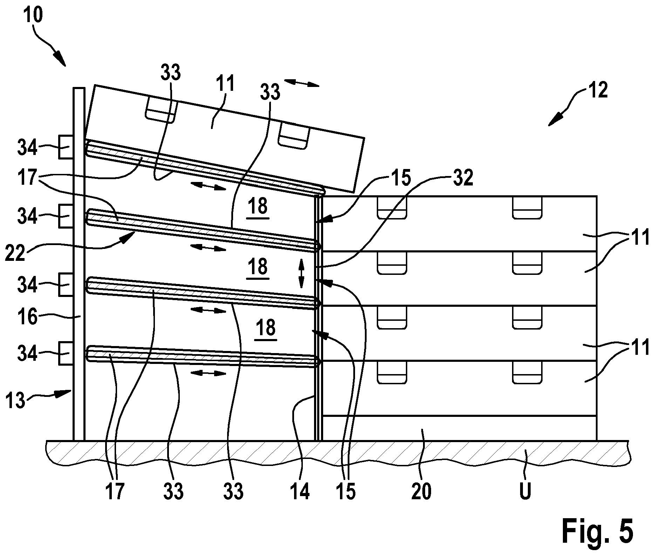

- Fig. 5: schematische Darstellungen einer weiteren Ausführungsform der Ladungshilfe mit einer automatisierten Handhabungseinrichtung.

Die in der Zeichnung dargestellte Ladungshilfe ist zum Befüllen eines aus fünf Transportbehältern gebildeten Stapels mit lebenden Geflügeltieren ausgebildet und eingerichtet. Die Ladungshilfe ist in gleicher Weise auch zum Befüllen eines aus drei bis zehn Transportbehältern gebildeten Stapels ausgebildet und eingerichtet. Die Ladungshilfe ist an unterschiedlichen Einsatzorten mobil und flexibel einsetzbar und ausschließlich zum temporären Zwischenlagern von leeren und zur Befüllung mit lebenden Geflügeltieren oder anderen Produkten der Nahrungsmittel verarbeitenden Industrie bereitstehenden Transportbehältern ausgebildet und eingerichtet.

Die dargestellte Ladungshilfe 10 ist zum temporären Zwischenlagern von nach oben mindestens teilweise geöffneten, ausschließlich leeren und in einem aus mindestens drei Transportbehältern 11 gebildeten Stapel 12 bereitstehenden Transportbehältern 11 während der Befüllung der Transportbehälter 11 mit lebenden Geflügeltieren ausgebildet und eingerichtet. Sie umfasst ein auf einem festen und ebenen Untergrund U aufstellbares Rahmengestell 13, wobei das Rahmengestell 13 auf einer dem zu befüllenden Stapel 12 zugewandten Vorderseite V mindestens zwei beabstandet zueinander angeordnete, vertikale Stützstreben 14 und mindestens zwei übereinander angeordnete und zwischen den vertikalen Stützstreben 14 ausgebildete Einführöffnungen 15 für Transportbehälter 11 aufweist, und wobei das Rahmengestell 13 auf einer dem zu befüllenden Stapel 12 abgewandten Rückseite R mindestens zwei beabstandet zueinander angeordnete, vertikale Stützstreben 16 aufweist, und wobei sich von den vertikalen Stützstreben 14 auf der Vorderseite V zu den vertikalen Stützstreben 16 auf der Rückseite R zu beiden Seiten des Rahmengestells 13 Gleitschienen 17 zur Bildung einer Aufnahme 18 für einen Transportbehälter 11 erstrecken, wobei das Rahmengestell 13 mindestens zwei übereinander angeordnete Aufnahmen 18 für jeweils einen Transportbehälter 11 aufweist.

Als fester und ebener Untergrund U ist eine Basis zu verstehen, auf der das Rahmengestell 13 in betriebsbereitem Zustand und bei bestimmungsgemäßem Gebrauch sicher stehen kann. Die Ebenheit ist nicht mathematisch zu verstehen. Als Untergrund kann z.B. ein Hallenboden oder eine Ladefläche oder dergleichen dienen. Vorderseite und Rückseite sind grundsätzlich beliebig austauschbar. Für die Erfindung wird die Seite des Rahmengestells 13, die bei bestimmungsgemäßem Gebrauch dem Stapel 12 zugewandt ist, der zu befüllen ist, als Vorderseite V definiert. Die Einführöffnungen 15 sind alleine durch den Abstand der beiden Stützstreben 16 gebildet und sind letztlich nur ein Freiraum, der den Durchtritt der Transportbehälter 11 in das Rahmengestell 13 ermöglicht. Auf gegenüberliegenden Seiten des Rahmengestells 13 erstreckt sich jeweils eine Gleitschiene 17 von einer vorderen Stützstrebe 14 zu einer hinteren Stützstrebe 16. Die beabstandeten und vorzugsweise als L-Profile ausgebildeten Gleitschienen 17 spannen dadurch eine ebene E auf. Mindestens zwei dieser Ebenen E sind übereinander angeordnet, wobei zwischen den Ebenen E die Aufnahmen 18 gebildet sind. Der Abstand A der Ebenen E ist geringfügig größer als die Höhe H der Transportbehälter 11. Diese Aufnahmen 18 sind ebenfalls nur Freiräume und sind für die Transportbehälter 11 durch die Einführöffnungen 15 zugänglich. In den Aufnahmen 18 liegen die Transportbehälter 11 auf den Gleitschienen 17 auf, beispielsweise links und rechts je auf einem Schenkel des L-Profils.

Diese Ladungshilfe 10 zeichnet sich erfindungsgemäß dadurch aus, dass die Gleitschienen 17 auf der dem zu befüllenden Stapel 12 aus Transportbehältern 11 zugewandten Vorderseite V des Rahmengestells 13 über die vertikalen Stützstreben 14 hinausragen, wobei dem Rahmengestell 13 eine Handhabungseinrichtung 22 zugeordnet ist, die zum Anheben der Transportbehälter 11 vom Stapel 12 ausgebildet und eingerichtet ist, derart, dass die gestapelten Transportbehälter 11 auf der dem Rahmengestell 13 zugewandten Seite außer Eingriff miteinander bringbar sind. Anders ausgedrückt sind die Gleitschienen 17 über die Stützstreben 14 hinaus verlängert, so dass die Gleitschienen 17 mit ihren freien Enden jeweils mit den gestapelten und leeren Transportbehältern 11 in Eingriff bzw. in Wirkverbindung bringbar sind. Beispielsweise können die freien Enden der Gleitschienen 17 an der Unterseite der jeweiligen Transportbehälter 11 an diesen angreifen bzw. in diese eingreifen. Für den Fall, das L-förmige Profile als Gleitschienen 17 eingesetzt werden, kann einer der Schenkel mit der Unterseite der Transportbehälter 11 in Kontakt gebracht werden, während der andere Schenkel mit einer Seitenwand der Transportbehälter 11 in Kontakt gebracht wird. In anderen Ausführungsformen können die Gleitschienen 17 auch in Ausnehmungen, z.B. Griffmulden, der Transportbehälter 11 eingreifen.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Ladungshilfe 10 weiterbilden können.

Optional ist auf der Vorderseite V des Rahmengestells 13 ein Positionierelement 19 zum Positionieren des Rahmengestells 13 relativ zum Stapel 12 ausgebildet, das mit dem untersten Transportbehälter 11 des zu befüllenden Stapels 12 in Wirkverbindung bringbar ist. Die Wirkverbindung kann unmittelbar zum Transportbehälter 11 oder mittelbar, beispielsweise über eine Palette 20 oder dergleichen, auf der der Stapel 12 positioniert ist, hergestellt werden. Das Positionierelement 19 kann ein gabelförmiges Element sein. Andere Ausbildungen, z.B. als einfaches Blech, als Platte, als Klemmmechanismus oder dergleichen, sind aber ebenfalls möglich. Das Positionierelement 19 ist bevorzugt am unteren, dem Untergrund U zugewandten Ende der vertikalen Stützstreben 14 angeordnet und zum Eingriff in den oder unter den untersten Transportbehälter 11 des zu befüllenden Stapels 12 oder die Palette 20, auf der der Stapel 12 steht, ausgebildet und eingerichtet. Das Positionierelement 19 kann starr am Rahmengestell 13 befestigt sein. Bevorzugt ist das Positionierelement 19 jedoch z.B. klappbar am Rahmengestell 13 angeordnet. Mittels des Positionierelementes 19 ist einerseits die Ladungshilfe 10 relativ zum Stapel 12 positionierbar. Andererseits verleiht das Positionierelement 19 der aus Ladungshilfe 10 und Stapel 12 in bestimmungsgemäßem Gebrauch gebildeten Einheit zusätzlich Stabilität.

Vorzugsweise ist die unterste der Aufnahmen 18 des Rahmengestells 13 beabstandet zum Untergrund U in einer Höhe ausgebildet ist, die der Höhe des zweiten Transportbehälters 11 von unten des zu befüllenden Stapels 12 entspricht. Mit anderen Worten befinden sich die Gleitschienen 17 der untersten Aufnahme 18 in einer Höhe H₁, die geringfügig oberhalb der oberen Kante K des untersten Transportbehälters 11 des zu bildenden Stapels 12 liegt (siehe insbesondere Figuren 1b und 2b), wodurch eine platzsparende Positionierung der Ladungshilfe 10 zum Stapel 12 realisierbar ist.

Das Rahmengestell 13 selbst ist bevorzugt aus einem Leichtmetall (wie z.B. Aluminium), einem in der Nahrungsmittel verarbeitenden Industrie zugelassenen Kunststoff oder einem hinsichtlich des Gewichts vergleichbaren Material hergestellt. Besonders bevorzugt ist das Rahmengestell 13 als Einheit faltbar und/oder zusammenlegbar ausgebildet. Alternativ kann das Rahmengestell 13 auch ein starres Regalelement sein. Das Rahmengestell 13 kann zur Stabilisierung zusätzlich zu den vertikalen Stützstreben 14, 16 und den Gleitschienen 17 weitere horizontal und/oder vertikal und/oder schräg/diagonal verlaufende Streben aufweisen.

Vorzugsweise weisen die Aufnahmen 18 auf der dem Stapel 12 zugewandten Vorderseite V des Rahmengestells 13 zwischen den beiden Stützstreben 14 jeweils eine Einführhilfe aufweisen, die sich mindestens über einen Teil der gesamten Breite erstreckt. Diese Einführhilfen, die z.B. horizontal verlaufende Streben sein können, bilden jeweils die untere Begrenzung für die Einführöffnungen 15 und weisen bevorzugt abgerundete Kanten auf, so dass das Einschieben der Transportbehälter 11 in die Aufnahmen 18 (siehe z.B. Pfeil Tᵢₙ in Figur 1a) und das Herausziehen der Transportbehälter 11 aus den Aufnahmen 18 (siehe z.B. Pfeil Tₒᵤₜ in Figuren 1b und 1c) unterstützt wird. Dem Rahmengestell 13 sind vorzugsweise Transportrollen 21 zugeordnet. Die Transportrollen 21 sind in der dargestellten Ausführungsform (siehe insbesondere Figuren 3 und 4) den vertikalen Stützstreben 16 auf der Rückseite R des Rahmengestells 13 zugeordnet und weisen einen verhältnismäßig großen Durchmesser auf. Anstelle der Transportrollen 21 können auch Walzen oder andere Gleitelemente an den unteren, dem Untergrund U zugewandten Enden der Stützstreben 14, 16 vorgesehen sein, um die Ladungshilfe 10 z.B. in einer Lagerhalle mit wenig Aufwand versetzen zu können.

In den Figuren 1a bis 1c ist eine einfache Variante der Ladungshilfe 10 dargestellt. Die Figuren 2a und 2b sowie die Figuren 3 und 4 zeigen erfindungsgemäße Weiterbildungen der Ladungshilfe 10, bei denen dem Rahmengestell 13 eine Handhabungseinrichtung 22 zugeordnet ist, die zum Anheben der Transportbehälter 11 vom Stapel 12 ausgebildet und eingerichtet ist, derart, dass die gestapelten Transportbehälter 11 auf der dem Rahmengestell 13 zugewandten Seite außer Eingriff miteinander bringbar sind (siehe z.B. Figur 2b). Bevorzugt umfasst die Handhabungseinrichtung 22 eine manuell bedienbare Hebelarmkonstruktion 23, mittels der sämtliche Transportbehälter 11 eines Stapels 12 mit Ausnahme des untersten Transportbehälters 11 synchron oder zeitlich versetzt nacheinander anhebbar und wieder absenkbar sind. Andere mechanische und/oder pneumatische und/oder hydraulische und/oder elektrisch angetriebene Liftkonstruktionen zum Anheben und Absenken der gestapelten Transportbehälter 11 des Stapels 12 sind aber ebenfalls einsetzbar.

In der erfindungsgemäßen Ausführungsform gemäß den Figuren 2a, 2b und 3 sind den vertikalen, auf der Vorderseite V des Rahmengestells 13 befindlichen Stützstreben 14 relativ zu den Stützstreben 14 auf und ab bewegbare Stellelemente 24 (siehe z.B. Figur 3) zugeordnet, die mit der (in der Figur 3 nicht dargestellten) Hebelarmkonstruktion 23 gelenkig verbunden sind. Die Stellelemente 24, vorzugsweise Stellschienen, sind an den einander zugekehrten Innenseiten der Stützstreben 14 angeordnet. Die Stellelemente 24 bzw. Stellschienen können einstückig oder mehrteilig ausgebildet sein. Die Hebelarmkonstruktion 23 umfasst für jede Stellschiene einen aus mindestens zwei, vorzugsweise drei gelenkig miteinander verbundenen Schwenkhebeln 25a, 25b, 25c gebildeten Stellmechanismus 26. Mit dem einen freien Ende ist der Stellmechanismus 26 (Schwenkhebel 25c) mit der Stellschiene gelenkig verbunden. Mit dem anderen freien Ende ist der Stellmechanismus 26 (Schwenkhebel 25a) an der Stützstrebe 14 gelagert.

Mittels eines Betätigungshebels 27, der mit dem Stellmechanismus 26 verbunden ist, und zwar am freien Endes des Schwenkhebels 25a, der an der Stützstrebe 14 gelagert ist, ist die Handhabungseinrichtung 22 aus einer Ausgangsposition, in der die Gleitschienen 17 ausgehend von der Rückseite R zur Vorderseite V hin leicht abfallend sind (siehe Figur 2a), in eine Liftposition, in der die Gleitschienen 17 im Wesentlichen horizontal ausgerichtet sind (siehe Figur 2b), und zurück bewegbar. Anders ausgedrückt ist die Handhabungseinrichtung 22 aus der Ausgangsstellung (siehe z.B. Figur 2a oder 3), in der die freien Enden der Gleitschienen 17 zwischen den gestapelten Transportbehältern 11 des Stapels 12 positionierbar sind, in die Liftposition (siehe z.B. Figur 2b oder 4), in der die Transportbehälter 11 außer Eingriff miteinander stehen, und zurück bewegbar. Dabei überwindet der Stellmechanismus 26 einen Totpunkt, um in der Liftposition verharren zu können. Entsprechend sind die Gleitschienen 17 an der Rückseite R des Rahmengestells 13 ortsfest und gelenkig an den Stützstreben 16 gelagert, während die Gleitschienen 17 an der Vorderseite V des Rahmengestells 13 an den Stellelementen 24 gelagert sind.

In den Stellelementen sind Langlöcher 28 ausgebildet, innerhalb derer sich die Gleitschienen 17 bewegen können. Die Größe/Länge der Langlöcher 28 nimmt von oben nach unten zu, derart, dass die Gleitschienen 17 der obersten Aufnahme 18 beim Betätigen der Handhabungseinrichtung 22 einen längeren Weg zurücklegen als die Gleitschienen 17 der darunterliegenden Aufnahmen 18. Um die Bewegung der Gleitschienen 17 nach unten zu begrenzen, sind jeweils Anschlagelemente 29 vorgesehen.

Jeder Stellmechanismus 26 kann einen Betätigungshebel 27 umfassen. Bevorzugt ist jedoch für beide Stellmechanismen 26 ein gemeinsamer Betätigungshebel 27 vorgesehen. Über eine Rotationsstange, die sich von vertikalem Stützelement 14 zu vertikalem Stützelement 14 erstreckt, stehen die beiden Stellmechanismen 26 in Wirkverbindung zueinander, derart, dass das Schwenken des Betätigungshebels 27 synchron auf beide Stellmechanismen 26 übertragen wird.

Als Stellelemente 24 können auch Seile, Ketten oder andere Stellmittel eingesetzt werden. In der Figur 4 ist eine Ausführungsform dargestellt, bei der die Stellelemente 24 als Seil 30 ausgebildet sind. An dem Seil 30 sind Mitnehmer 31 für die Gleitschienen 17 angeordnet. Beim Anheben des Seils 30 greifen die Mitnehmer 31 zeitlich versetzt nacheinander an den Gleitschienen 17 an. Beim Absenken begrenzen wiederum Anschlagelemente 29 die Bewegung nach unten. Die Seile 30 können ebenfalls mit der Hebelarmkonstruktion 23 bedient werden. Optional ist die Hebelarmkonstruktion 23 auch automatisiert, beispielsweise mittels eines Antriebs, betätigbar.

In der Figur 5 ist eine Ladungshilfe 10 dargestellt, bei der die Handhabungseinrichtung 22 zum automatischen Anheben sämtlicher Transportbehälter 11 eines Stapels 12 mit Ausnahme des untersten Transportbehälters 11 und zum automatischen Ziehen der Transportbehälter 11 vom Stapel 12 in die Aufnahmen 18 sowie zum automatischen Schieben der Transportbehälter 11 aus den Aufnahmen 18 zur Bildung des Stapels 12 ausgebildet und eingerichtet ist. Die Gleitschienen 17 können wie in den zuvor beschriebenen Ausführungsformen mit Bezug auf die Figuren 2a, 2b, 3 und 4 insbesondere auf der Vorderseite V im Bereich der Stützstreben 14 mit entsprechenden Antriebsmitteln auf und ab bewegbar ausgebildet sein. Die Gleitschienen 17 können aber auch in Nuten 32, die in den einander zugekehrten Innenseiten der Stützstreben 14 ausgebildet sind, geführt und motorisch auf und ab bewegbar ausgebildet sein, um die Liftfunktion zum Anheben und Absenken mindestens der dem Rahmengestell 13 zugewandten Seiten der Transportbehälter 11 zu automatisieren. Den Gleitschienen 17 selbst können motorisch angetriebene Umlaufförderer 33 zugeordnet sein. Vorzugsweise ist jedem Umlaufförderer 33 ein separater Antrieb 34 zugeordnet. Die Umlaufförderer 33 können sich auch über die gesamte Breite der Aufnahmen 18 erstrecken, derart, dass die Transportbehälter 11 z.B. vollflächig auf einem umlaufenden Fördergurt aufliegen, mittels dem die Transportbehälter 11 in die Aufnahmen 18 eingeführt und auch wieder aus den Aufnahmen 18 ausgeführt werden können. Anstelle der Umlaufförderer 33 können z.B. auch hydraulisch oder pneumatisch betriebene Stempel oder dergleichen eingesetzt werden, die zum automatischen Ziehen und Schieben der Transportbehälter 11 ausgebildet und eingerichtet sind.

Im Folgenden wird das erfindungsgemäße Verfahren anhand der Zeichnung (insbesondere den Figuren 1a bis 1c) näher erläutert.

Das Verfahren dient zum sequentiellen Befüllen gestapelter und nach oben mindestens teilweise geöffneter Transportbehälter 11 mit lebenden Geflügeltieren. Die leeren Transportbehälter 11 werden in gestapelter Form an den Zuchtbetrieben/Farmen abgeliefert. Die Stapel 12 bestehen üblicherweise aus drei oder mehr Transportbehältern 11. Vorzugsweise bilden jeweils fünf leere Transportbehälter 11 einen Stapel 12. Die Stapel 12 werden bevorzugt in der Nähe der lebenden Geflügeltiere platziert. Zum Befüllen werden sämtliche Transportbehälter 11 des aus mindestens drei leeren Transportbehältern 11 gebildeten Stapels 12 vom untersten Transportbehälter 11 des Stapels 12 abgenommen. Der unterste Transportbehälter 11 ist dadurch nach oben mindestens teilweise geöffnet. Dann wird der unterste, leere Transportbehälter 11 mit lebenden Geflügeltieren befüllt. Wenn der unterste Transportbehälter 11 befüllt ist, wird ein weiterer, leerer Transportbehälters 11 auf den befüllten Transportbehälter 11 gestapelt, wobei der leere Transportbehälter 11 den befüllten Transportbehälter 11 abdeckt, wodurch die lebenden Geflügeltiere, die sich im unteren, bereits befüllten Transportbehälter 11 befinden, daran gehindert werden, aus dem Transportbehälter 11 zu fliehen. Der noch leere, weitere und damit oberste Transportbehälter 11 des zu befüllenden Stapels 12 Transportbehälter 11 wird dann mit lebenden Geflügeltieren befüllt. Diese Schritte werden wiederholt, bis sämtliche Transportbehälter 11 des zu bildenden Stapels 12, in der dargestellten Ausführungsform fünf Transportbehälter 11, befüllt sind. Abschließend wird der oberste, befüllte Transportbehälters 11 des Stapels 12 mit einem Deckel abgedeckt.

Erfindungsgemäß wird zum Entfernen der Transportbehälter 11 vom untersten Transportbehälter 11 des Stapels 12 eine Ladungshilfe 10 vor dem zu befüllenden Stapel 12 aus leeren Transportbehältern 11 platziert. Diese Ladungshilfe 10 wird vor dem Stapel 12 ausgerichtet und mit diesem in Wirkverbindung gebracht, wobei sämtliche Transportbehälter 11 des Stapels 12 mit Ausnahme des untersten Transportbehälters 11 zum temporären Zwischenlagern in die Ladungshilfe 10 geschoben werden. Wenn der unterste Transportbehälter 11 des Stapels 12 befüllt ist, wird der nächst höhere Transportbehälter 11 aus der Ladungshilfe 10 gezogen, wobei die leeren Transportbehälter 11 nach und nach von unten nach oben aus der Ladungshilfe 10 auf den bereits gebildeten Stapel 12 befüllter Transportbehälter 11 gezogen werden, sobald der oberste Transportbehälter 11 des bereits gebildeten Stapels 12 befüllter Transportbehälter 11 vollständig befüllt ist. Wenn alle Transportbehälter 11 des zu bildenden Stapels 12 befüllt sind und der oberste Transportbehälter 11 des Stapels 12 mit dem Deckel abgedeckt ist, wird die Ladungshilfe 10 entfernt und zu einem nächsten Stapel 12 aus leeren Transportbehältern 11 transportiert. Der von der Ladungshilfe 10 befreite Stapel 12 aus befüllten Transportbehältern 11 wird dann auf einen LKW, einen Anhänger oder ein anderes Transportmittel gebracht, um den Stapel 12 zusammen mit anderen Stapeln 12 aus befüllten Transportbehältern 11 zur Verarbeitungsfabrik zu transportieren.

Das Handhaben der Transportbehälter 11, also das Schieben der Transportbehälter 11 vom Stapel 12 (ggf. nach einem Anheben der der Ladungshilfe 10 zugewandten Vorderseite der Transportbehälter 11) in die Ladungshilfe 10 und das Herausziehen der Transportbehälter 11 aus der Ladungshilfe 10 auf den zu bildenden Stapel 12 kann manuell durch eine Bedienperson erfolgen. Bevorzugt werden die leeren Transportbehälter 11 des Stapels 12 mit Ausnahme des untersten Transportbehälters 11 mittels einer Handhabungsvorrichtung 22 mindestens auf der der Ladungshilfe 10 zugewandten Seite derart angehoben, dass sie außer Eingriff miteinander sind, um sie barrierefrei in die Ladungshilfe 10 schieben zu können. Sobald die Transportbehälter 11 mindestens auf der der Ladungshilfe 10 zugwandten Seite vollständig voneinander gelöst sind, also ein Spalt zwischen der Unterseite/Unterkante der Transportbehälter 11 und der Oberseite/Oberkante des jeweils darunterliegenden Transportbehälters 11 besteht, werden die Transportbehälter 11 beginnend mit dem obersten Transportbehälter 11 des Stapels 12 in die Ladungshilfe 10 geschoben. Nach dem Herausziehen der Transportbehälter 11 in umgekehrter Reihenfolge können die Transportbehälter 11 mittels der Handhabungseinrichtung 22 auf der einen Seite wieder abgesenkt werden, so dass die gestapelten Transportbehälter 11 wieder in Eingriff miteinander stehen und eine stabile Einheit bilden.

Das Anheben und Absenken der Transportbehälter 11 einerseits und das Schieben und Ziehen andererseits kann bevorzugt automatisiert erfolgt. Besonders bevorzugt wird für das Verfahren die Ladungshilfe 10 nach einem oder mehreren der Ansprüche 1 bis 10 eingesetzt.

## Patentansprüche

1. Ladungshilfe (10), ausgebildet und eingerichtet zum temporären Zwischenlagern von nach oben mindestens teilweise geöffneten, ausschließlich leeren und in einem aus mindestens drei Transportbehältern (11) gebildeten Stapel (12) bereitstehenden Transportbehältern (11) während der Befüllung der Transportbehälter (11) mit lebenden Geflügeltieren, umfassend ein auf einem festen und ebenen Untergrund (U) aufstellbares Rahmengestell (13), wobei das Rahmengestell (13) auf einer dem zu befüllenden Stapel (12) zugewandten Vorderseite (V) mindestens zwei beabstandet zueinander angeordnete, vertikale Stützstreben (14) und mindestens zwei übereinander angeordnete und zwischen den vertikalen Stützstreben (14) ausgebildete Einführöffnungen (15) für Transportbehälter (11) aufweist, und wobei das Rahmengestell (13) auf einer dem zu befüllenden Stapel (12) abgewandten Rückseite (R) mindestens zwei beabstandet zueinander angeordnete, vertikale Stützstreben (16) aufweist, und wobei sich von den vertikalen Stützstreben (14) auf der Vorderseite (V) zu den vertikalen Stützstreben (16) auf der Rückseite (R) zu beiden Seiten des Rahmengestells (13) Gleitschienen (17) zur Bildung einer Aufnahme (18) für einen Transportbehälter (11) erstrecken, wobei das Rahmengestell (13) mindestens zwei übereinander angeordnete Aufnahmen (18) für jeweils einen Transportbehälter (11) aufweist, und wobei die Gleitschienen (17) auf der dem zu befüllenden Stapel (12) aus Transportbehältern (11) zugewandten Vorderseite (V) des Rahmengestells (13) über die vertikalen Stützstreben (14) hinausragen, **dadurch gekennzeichnet, dass** dem Rahmengestell (13) eine Handhabungseinrichtung (22) zugeordnet ist, die zum Anheben der Transportbehälter (11) vom Stapel (12) ausgebildet und eingerichtet ist, derart, dass die gestapelten Transportbehälter (11) mindestens auf der dem Rahmengestell (13) zugewandten Seite außer Eingriff miteinander bringbar sind.

2. Ladungshilfe (10) nach Anspruch 1, **dadurch gekennzeichnet, dass** auf der Vorderseite (V) des Rahmengestells (13) ein zusätzliches Positionierelement (19) zum Positionieren des Rahmengestells (13) relativ zum Stapel (12) ausgebildet ist, das mit dem untersten Transportbehälter (11) des zu befüllenden Stapels (12) in Wirkverbindung bringbar ist.

3. Ladungshilfe (10) nach Anspruch 1 oder 2, **dadurch gekennzeichnet, dass** die unterste der Aufnahmen (18) des Rahmengestells (13) beabstandet zum Untergrund in einer Höhe ausgebildet ist, die der Höhe des zweiten Transportbehälters (11) von unten des zu befüllenden Stapels (12) entspricht.

4. Ladungshilfe (10) nach einem oder mehreren der Ansprüche 1 bis 3, **dadurch gekennzeichnet, dass** das Rahmengestell (13) aus einem Leichtmetall, einem Kunststoff oder einem hinsichtlich des Gewichts vergleichbaren Material hergestellt ist.

5. Ladungshilfe (10) nach einem oder mehreren der Ansprüche 1 bis 4, **dadurch gekennzeichnet, dass** das Rahmengestell (13) als Einheit faltbar und/oder zusammenlegbar ausgebildet ist.

6. Ladungshilfe (10) nach einem oder mehreren der Ansprüche 1 bis 5, **dadurch gekennzeichnet, dass** die Aufnahmen (18) auf der dem Stapel (12) zugewandten Vorderseite (V) des Rahmengestells (13) im Bereich der Einführöffnungen (15) zwischen den beiden Stützstreben (14) jeweils eine Einführhilfe aufweisen, die sich mindestens über einen Teil der gesamten Breite erstreckt.

7. Ladungshilfe (10) nach einem oder mehreren der Ansprüche 1 bis 6, **dadurch gekennzeichnet, dass** dem Rahmengestell (13) Transportrollen (21) zugeordnet sind.

8. Ladungshilfe (10) nach einem oder mehreren der Ansprüche 1 bis 7, **dadurch gekennzeichnet, dass** die Handhabungseinrichtung (22) eine manuell bedienbare Hebelarmkonstruktion (23) umfasst, mittels der sämtliche Transportbehälter (11) eines Stapels (12) mit Ausnahme des untersten Transportbehälters (11) anhebbar und wieder absenkbar sind.

9. Ladungshilfe (10) nach Anspruch 8, **dadurch gekennzeichnet, dass** den vertikalen, auf der Vorderseite (V) des Rahmengestells (13) befindlichen Stützstreben (14) relativ zu den Stützstreben (14) auf und ab bewegbare Stellelemente (24) zugeordnet sind, die mit der Hebelarmkonstruktion (23) gelenkig verbunden ist, und das die Gleitschienen (17) an der Rückseite (R) des Rahmengestells (13) ortsfest und gelenkig an den Stützstreben (16) der Rückseite (R) gelagert sind, während die Gleitschienen (17) an der Vorderseite (V) des Rahmengestells (13) an den Stellelemente (24) ortsveränderlich und gelenkig gelagert sind.

10. Ladungshilfe (10) nach einem oder mehreren der Ansprüche 1 bis 9, **dadurch gekennzeichnet, dass** die Handhabungseinrichtung (22) zum automatischen Anheben sämtlicher Transportbehälter (11) eines Stapels (12) mit Ausnahme des untersten Transportbehälters (11) und zum automatischen Ziehen der Transportbehälter (11) vom Stapel (12) in die Aufnahmen (18) sowie zum automatischen Schieben der Transportbehälter (11) aus den Aufnahmen (18) zur Bildung des Stapels (12) ausgebildet und eingerichtet ist.

11. Verfahren zum sequentiellen Befüllen gestapelter und nach oben mindestens teilweise geöffneter Transportbehälter (11) mit lebenden Geflügeltieren, umfassend die Schritte:
a) Entfernen sämtlicher Transportbehälter (11) eines aus mindestens drei leeren Transportbehältern (11) gebildeten Stapels (12) vom untersten Transportbehälter (11) des Stapels (12),
b) Befüllen des untersten, leeren Transportbehälters (11) mit lebenden Geflügeltieren,
c) Stapeln eines weiteren, leeren Transportbehälters (11) auf den befüllten Transportbehälter (11), wobei der leere Transportbehälter (11) den befüllten Transportbehälter (11) abdeckt,
d) Befüllen des weiteren, leeren Transportbehälters (11) mit lebenden Geflügeltieren,
e) Wiederholen der Schritte c) und d), bis sämtliche Transportbehälter (11) des Stapels (12) befüllt sind, und
f) Abdecken des obersten, befüllten Transportbehälters (11) des Stapels (12) mit einem Deckel,
**dadurch gekennzeichnet, dass** zum Entfernen der Transportbehälter (11) gemäß Schritt a) eine Ladungshilfe (10) vor dem zu befüllenden Stapel (12) aus leeren Transportbehältern (11) platziert wird und sämtliche Transportbehälter (11) des Stapels (12) mit Ausnahme des untersten Transportbehälters (11) zum temporären Zwischenlagern in die Ladungshilfe (10) geschoben werden, wobei die leeren Transportbehälter (11) für die Schritte c) bis e) nach und nach von unten nach oben aus der Ladungshilfe (10) auf den bereits gebildeten Stapel (12) gefüllter Transportbehälter (11) gezogen werden, sobald der oberste Transportbehälter (11) des bereits gebildeten Stapels (12) gefüllter Transportbehälter (11) vollständig befüllt ist.

12. Verfahren nach Anspruch 11, **dadurch gekennzeichnet, dass** die leeren Transportbehälter (11) des Stapels (12) mit Ausnahme des untersten Transportbehälters (11) mittels einer Handhabungseinrichtung (22) mindestens auf der der Ladungshilfe (10) zugewandten Seite derart angehoben werden, dass sie außer Eingriff miteinander sind, um sie barrierefrei in die Ladungshilfe (10) schieben zu können.

13. Verfahren nach Anspruch 11 oder 12, **dadurch gekennzeichnet, dass** das Anheben der leeren Transportbehälter (11) vor dem Einschieben derselben in die Ladungshilfe (10) sowie das Schieben der Transportbehälter (11) in die Ladungshilfe (10) und das Ziehen der Transportbehälter (11) aus der Ladungshilfe (10) auf den Stapel (12) aus bereits befüllten Transportbehältern (11) mittels Antriebselementen automatisiert erfolgt.

14. Verfahren nach einem oder mehreren der Ansprüche 11 bis 13, **dadurch gekennzeichnet, dass** die Ladungshilfe (10) nach einem oder mehreren der Ansprüche 1 bis 10 eingesetzt wird.

## Claims

1. Loading aid (10), formed and adapted for the temporary intermediate storage of transport containers (11) which are at least partially open to the top, are exclusively empty and are standing ready in a stack (12) formed of at least three transport containers (11), during filling of the transport containers (11) with live poultry animals, comprising a rack (13) which can be positioned on a solid and flat ground surface (U), wherein the rack (13) has on a front side (V) facing the stack (12) that is to be filled at least two vertical support struts (14) arranged spaced apart from one another and at least two insertion openings (15) for transport containers (11) arranged one above the other and formed between the vertical support struts (14), and wherein the rack (13) has on a rear side (R) remote from the stack (12) that is to be filled at least two vertical support struts (16) arranged spaced apart from one another, and wherein slide rails (17) extend on both sides of the rack (13) from the vertical support struts (14) on the front side (V) to the vertical support struts (16) on the rear side (R) to form a receptacle (18) for a transport container (11), wherein the rack (13) has at least two receptacles (18) arranged one above the other for in each case one transport container (11) and wherein the slide rails (17) on the front side (V) of the rack (13) facing the stack (12) of transport containers (11) that is to be filled protrude beyond the vertical support struts (14), **characterised in that** the rack (13) has an associated handling device (22) which is formed and adapted for lifting the transport containers (11) from the stack (12), in such a manner that the stacked transport containers (11) can be brought out of engagement with one another at least on the side facing the rack (13).

2. Loading aid (10) according to claim 1, **characterised in that** there is formed on the front side (V) of the rack (13) an additional positioning element (19) for positioning the rack (13) relative to the stack (12), which positioning element can be brought into operative connection with the lowermost transport container (11) of the stack (12) that is to be filled.

3. Loading aid (10) according to claim 1 or 2, **characterised in that** the lowermost of the receptacles (18) of the rack (13) is spaced apart from the ground surface at a height which corresponds to the height of the second transport container (11) from the bottom of the stack (12) that is to be filled.

4. Loading aid (10) according to one or more of claims 1 to 3, **characterised in that** the rack (13) is made of a light metal, a plastics material, or a material that is comparable in terms of weight.

5. Loading aid (10) according to one or more of claims 1 to 4, **characterised in that** the rack (13) is foldable and/or collapsible as a unit.

6. Loading aid (10) according to one or more of claims 1 to 5, **characterised in that** the receptacles (18) each have an insertion aid on the front side (V) of the rack (13) facing the stack (12), in the region of the insertion openings (15) between the two support struts (14), which insertion aid extends over at least a portion of the entire width.

7. Loading aid (10) according to one or more of claims 1 to 6, **characterised in that** transport rollers (21) are associated with the rack (13).

8. Loading aid (10) according to one or more of the claims 1 to 7, **characterised in that** the handling device (22) comprises a manually operable lever arm arrangement (23) by means of which all the transport containers (11) of a stack (12), with the exception of the lowermost transport container (11), can be lifted and lowered again.

9. Loading aid (10) according to claim 8, **characterised in that** the vertical support struts (14) situated on the front side (V) of the rack (13) have associated adjusting elements (24) which are movable up and down relative to the support struts (14) and which are articulated with the lever arm arrangement (23), and **in that** the slide rails (17) on the rear side (R) of the rack (13) are mounted in a stationary and articulated manner on the support struts (16) of the rear side (R), while the slide rails (17) on the front side (V) of the rack (13) are mounted in a non-stationary and articulated manner on the adjusting elements (24).

10. Loading aid (10) according to one or more of claims 1 to 9, **characterised in that** the handling device (22) is formed and adapted for automatically lifting all the transport containers (11) of a stack (12), with the exception of the lowermost transport container (11), and for automatically pulling the transport containers (11) from the stack (12) into the receptacles (18) as well as for automatically pushing the transport containers (11) out of the receptacles (18) to form the stack (12).

11. Method for sequentially filling stacked transport containers (11) which are at least partially open to the top with live poultry animals, comprising the steps:
a) removing all the transport containers (11) of a stack (12) formed of at least three empty transport containers (11) from the lowermost transport container (11) of the stack (12),
b) filling the lowermost, empty transport container (11) with live poultry animals,
c) stacking a further, empty transport container (11) on the filled transport container (11), the empty transport container (11) covering the filled transport container (11),
d) filling the further, empty transport container (11) with live poultry animals,
e) repeating steps c) and d) until all the transport containers (11) of the stack (12) are filled, and
f) covering the topmost, filled transport container (11) of the stack (12) with a lid,
**characterised in that,** for removing the transport containers (11) according to step a), a loading aid (10) is placed in front of the stack (12) of empty transport containers (11) that is to be filled and all the transport containers (11) of the stack (12), with the exception of the lowermost transport container (11), are pushed into the loading aid (10) for temporary intermediate storage, wherein the empty transport containers (11) for steps c) to e) are pulled one by one, from bottom to top, out of the loading aid (10) onto the already formed stack (12) of filled transport containers (11) as soon as the topmost transport container (11) of the already formed stack (12) of filled transport containers (11) is completely filled.

12. Method according to claim 11, **characterised in that** the empty transport containers (11) of the stack (12), with the exception of the lowermost transport container (11), are lifted by means of a handling device (22) at least on the side facing the loading aid (10) in such a manner that they are out of engagement with one another, in order to allow them to be pushed into the loading aid (10) without encountering any barriers.

13. Method according to claim 11 or 12, **characterised in that** the lifting of the empty transport containers (11) before they are pushed into the loading aid (10) as well as the pushing of the transport containers (11) into the loading aid (10) and the pulling of the transport containers (11) out of the loading aid (10) onto the stack (12) of already filled transport containers (11) are carried out in an automated manner by means of drive elements.

14. Method according to one or more of claims 11 to 13, **characterised in that** the loading aid (10) according to one or more of claims 1 to 10 is used.

## Revendications

1. Aide au chargement (10), configurée et adaptée pour l'entreposage temporaire de contenants de transport (11) au moins partiellement ouverts vers le haut, exclusivement vides et disponibles dans une pile (12) formée d'au moins trois contenants de transport (11) pendant le remplissage des contenants de transport (11) avec des volailles vivantes, comprenant un châssis (13) pouvant être posé sur un support (U) fixe et plan, le châssis (13) présentant, sur un côté avant (V) tourné vers la pile (12) à remplir, au moins deux entretoises de soutien verticales (14) agencées à distance l'une de l'autre et au moins deux ouvertures d'introduction (15) pour des contenants de transport (11), agencées l'une au-dessus de l'autre et configurées entre les entretoises de soutien verticales (14), et le châssis (13) présentant, sur un côté arrière (R) détourné de la pile (12) à remplir, au moins deux entretoises de soutien verticales (16) agencées à distance l'une de l'autre, et des glissières (17) s'étendant depuis les entretoises de soutien verticales (14) sur le côté avant (V) jusqu'aux entretoises de soutien verticales (16) sur le côté arrière (R) des deux côtés du châssis (13) pour former un logement (18) pour un contenant de transport (11), le châssis (13) présentant au moins deux logements (18) agencés l'un au-dessus de l'autre pour respectivement un contenant de transport (11), et les glissières (17) dépassant des entretoises de soutien verticales (14) sur le côté avant (V) du châssis (13) tourné vers la pile (12) de contenants de transport (11) à remplir, **caractérisé en ce qu'**un dispositif de manipulation (22) est associé au châssis (13), lequel est configuré et adapté pour soulever les contenants de transport (11) de la pile (12), de telle sorte que les contenants de transport (11) empilés peuvent être amenés hors de prise les uns avec les autres au moins sur le côté tourné vers le châssis (13).

2. Aide au chargement (10) selon la revendication 1, **caractérisée en ce qu'**un élément de positionnement supplémentaire (19) est configuré sur le côté avant (V) du châssis (13) pour positionner le châssis (13) par rapport à la pile (12), lequel peut être mis en liaison active avec le contenant de transport (11) le plus bas de la pile (12) à remplir.

3. Aide au chargement (10) selon la revendication 1 ou 2, **caractérisée en ce que** le plus bas des logements (18) du châssis (13) est configuré à distance du support à une hauteur qui correspond à la hauteur du deuxième contenant de transport (11) par le bas de la pile (12) à remplir.

4. Aide au chargement (10) selon une ou plusieurs des revendications 1 à 3, **caractérisée en ce que** le châssis (13) est fabriqué en un métal léger, en une matière plastique ou en un matériau comparable en termes de poids.

5. Aide au chargement (10) selon une ou plusieurs des revendications 1 à 4, **caractérisée en ce que** le châssis (13) est configuré pour pouvoir être plié et/ou replié en tant qu'unité.

6. Aide au chargement (10) selon une ou plusieurs des revendications 1 à 5, **caractérisée en ce que** les logements (18) sur le côté avant (V) du châssis (13) tourné vers la pile (12) présentent chacun, dans la zone des ouvertures d'introduction (15) entre les deux entretoises de soutien (14), une aide à l'introduction qui s'étend au moins sur une partie de la largeur totale.

7. Aide au chargement (10) selon une ou plusieurs des revendications 1 à 6, **caractérisée en ce que** des rouleaux de transport (21) sont associés au châssis (13).

8. Aide au chargement (10) selon une ou plusieurs des revendications 1 à 7, **caractérisée en ce que** le dispositif de manipulation (22) comprend une structure de bras de levier (23) à commande manuelle, au moyen de laquelle tous les contenants de transport (11) d'une pile (12), à l'exception du contenant de transport (11) le plus bas, peuvent être soulevés et à nouveau abaissés.

9. Aide au chargement (10) selon la revendication 8, **caractérisée en ce que** des éléments de réglage (24) déplaçables vers le haut et vers le bas par rapport aux entretoises de soutien (14) sont associés aux entretoises de soutien verticales (14) se trouvant sur le côté avant (V) du châssis (13), lesquels sont reliés de manière articulée à la structure de bras de levier (23), et **en ce que** les glissières (17) sur le côté arrière (R) du châssis (13) sont montées de manière fixe et articulée sur les entretoises de soutien (16) du côté arrière (R), tandis que les glissières (17) sur le côté avant (V) du châssis (13) sont montées de manière mobile et articulée sur les éléments de réglage (24).

10. Aide au chargement (10) selon une ou plusieurs des revendications 1 à 9, **caractérisée en ce que** le dispositif de manipulation (22) est configuré et adapté pour soulever automatiquement tous les contenants de transport (11) d'une pile (12), à l'exception du contenant de transport (11) le plus bas, et pour tirer automatiquement les contenants de transport (11) de la pile (12) dans les logements (18) ainsi que pour pousser automatiquement les contenants de transport (11) hors des logements (18) pour former la pile (12).

11. Procédé de remplissage séquentiel de contenants de transport (11) empilés et au moins partiellement ouverts vers le haut avec des volailles vivantes, comprenant les étapes suivantes :
a) l'enlèvement de tous les contenants de transport (11) d'une pile (12) formée d'au moins trois contenants de transport (11) vides du contenant de transport (11) le plus bas de la pile (12),
b) le remplissage du contenant de transport (11) vide le plus bas avec des volailles vivantes,
c) l'empilement d'un autre contenant de transport (11) vide sur le contenant de transport (11) rempli, le contenant de transport (11) vide recouvrant le contenant de transport (11) rempli,
d) le remplissage de l'autre contenant de transport (11) vide avec des volailles vivantes,
e) la répétition des étapes c) et d) jusqu'à ce que tous les contenants de transport (11) de la pile (12) soient remplis, et
f) le recouvrement du contenant de transport (11) rempli le plus haut de la pile (12) avec un couvercle,
**caractérisé en ce que**, pour enlever les contenants de transport (11) selon l'étape a), une aide au chargement (10) est placée devant la pile (12) à remplir de contenants de transport (11) vides et tous les contenants de transport (11) de la pile (12), à l'exception du contenant de transport (11) le plus bas, sont poussés dans l'aide au chargement (10) pour être entreposés temporairement, les contenants de transport (11) vides pour les étapes c) à e) étant tirés progressivement de bas en haut de l'aide au chargement (10) sur la pile (12) déjà formée de contenants de transport (11) remplis dès que le contenant de transport (11) le plus haut de la pile (12) déjà formée de contenants de transport (11) remplis est entièrement rempli.

12. Procédé selon la revendication 11, **caractérisé en ce que** les contenants de transport (11) vides de la pile (12), à l'exception du contenant de transport (11) le plus bas, sont soulevés au moyen d'un dispositif de manipulation (22) au moins sur le côté tourné vers l'aide au chargement (10) de telle sorte qu'ils sont hors de prise les uns avec les autres afin de pouvoir être poussés sans barrière dans l'aide au chargement (10).

13. Procédé selon la revendication 11 ou 12, **caractérisé en ce que** le soulèvement des contenants de transport (11) vides avant leur insertion dans l'aide au chargement (10) ainsi que la poussée des contenants de transport (11) dans l'aide au chargement (10) et le tirage des contenants de transport (11) hors de l'aide au chargement (10) sur la pile (12) de contenants de transport (11) déjà remplis sont effectués de manière automatisée au moyen d'éléments d'entraînement.

14. Procédé selon une ou plusieurs des revendications 11 à 13, **caractérisé en ce que** l'aide au chargement (10) selon une ou plusieurs des revendications 1 à 10 est utilisée.
